# EUROPEAN PATENT SPECIFICATION

(11) **EP 2 035 478 B1**
(45) Date of publication and mention of the grant of the patent: **09.09.2015**
(21) Application number: 07764913.5
(22) Date of filing: 28.06.2007
(51) Int. Cl.: C08G 63/48, C08G 63/20, C09D 167/08, C09D 5/03, C08J 7/04

(54) **BRANCHED POLYESTER CONTAINING POWDER COATING COMPOSITION**
VERZWEIGTER POLYESTER IN PULVERBESCHICHTUNGEN
UTILISATION DE POLYESTER RAMIFIÉ DANS DES COMPOSITIONS DE REVÊTEMENT EN POUDRE

(30) Priority: 30.06.2006 EP 06013596
(43) Date of publication of application: 18.03.2009
(73) Proprietor: DSM IP Assets B.V., 6411 TE Heerlen (NL)
(72) Inventor: URMANOVA, Antonia, NL-8014 LB Zwolle (NL); VAN DEN BERG JETHS, Robert, NL-7323 MB Apeldoorn (NL); BUIJSEN, Paulus, Franciscus, Anna, NL-3144 GD Maassluis (NL); CUIJPERS, Johannes, Wilhelmus, Jacobus, Leonardus, NL-6041 JT Roermond (NL); BEETSMA, Jochum, NL-8022 RE Zwolle (NL)
(74) Representative: Diakoumakos, Konstantinos
(86) International application number: PCT/EP2007/005726
(87) International publication number: WO 2008/000471

(56) References cited:
- GB-A- 1 299 343
- GB-A- 1 456 107
- US-A- 2 876 135
- US-A- 4 029 617
- US-A- 4 451 596
- US-A- 4 474 940
- US-A- 5 744 248
- US-A1- 2004 067 430
- US-B1- 6 210 872
- US-B1- 6 284 845

## Description

The invention relates to a binder composition comprising a branched, acid-functional polyester. The invention further relates to a branched polyester, a powder coating composition comprising the binder composition, substrates coated with the powder coating composition, and the cured coating.

Powder coatings based on polyesters and epoxy-containing compounds, like for example tris-glycidyl-isocyanurate (TGIC) and bisphenol-A epoxy, are known. However TGIC is mutagenic and bisphenol-A epoxy is suspected to be carcinogenic. Therefore paint producers and consumers are searching for alternatives to replace these kinds of components in powder coatings.

An alternative is polyester/bisphenol-A epoxy systems, also referred to as hybrid systems. These have good chemical resistance but can be expensive and still contain bisphenol-A epoxy.

One other alternative, mainly used for outdoor applications, are the β-hydroxy-alkylamide (Primid®-like) systems. β-hydroxy-alkylamide systems have good weather resistance but suffer, in comparison with TGIC powder coatings, with regard to properties such as chemical resistance, degassing limit, salt spray, blanching, humidity, and boiling water resistance. Plus they do not allow for such good control over the curing speed by a given curing temperature (pill flow and anti-dripping properties).

Broadly in accordance with the invention there is provided a binder suitable for use in powder coating compositions as disclosed herein and as described by the claims that have acceptable flow, appearance, chemical resistance, and mechanical properties.

The binder according to the present invention comprises a crosslinker and a branched, partially defunctionalized, acid-functional polyester, wherein the polyester is based on:
a. At least one multi-functional component that is either carboxyl- functional, hydroxyl- functional or carboxyl- and hydroxyl- functional;
b. At least one di-functional component that is reactive towards a functional group on the multi-functional component; and
c. At least one mono-functional component with a separate crosslinker. With separate crosslinker is meant that the crosslinker is chemically distinct from the resin. It is within the scope of the invention to use more than one resin and/or more than one crosslinker in the binder. Preferably at least one crosslinker is reactive with acid functional polyesters. With multi-functional component is meant a component that has a functionality of three or higher.

A polyester is generally prepared by the reaction between an acid, or an acid derivative and an alcohol. This reaction is called esterification. To obtain a polyester-chain it is necessary to use at least di-functional starting components. The combination of a di-functional acid with a di-functional alcohol will lead to the formation of a linear polyester. Generally, when at least one of the components is multi-functional, a branched polyester will be obtained.

For the polyester according to the invention, it is necessary to use at least one multi-functional component, at least one di-functional component, and at least one mono-functional component. In certain embodiments the acid is chosen as the multi-functional component while in other embodiments the alcohol is chosen as the multi-functional component. The man skilled in the art will understand that it is also possible to use combinations of acids and alcohols. As used herein, combination can mean substances having different chemical natures or different functionalities. Thus it is possible to use, for example, a combination of two or more different acids or alcohols with the same functionality. However, it is also possible to combine at least one di-functional acid or alcohol with at least one multi-functional acid or alcohol.

The choice of the starting components can determine the properties of the polyester obtained. Examples of properties influenced by the choice of the starting components include mechanical properties (such as impact resistance), flexibility, outdoor durability, chemical resistance, boiling-water resistance, salt-spray resistance, glass transition temperature, and powder stability. Another important parameter in the esterification reaction is the ratio between the acid or acid-derivative and the alcohol. This ratio determines, amongst other things, the character of the polyester as being either acid-functional or hydroxyl-functional, the acid value, the molecular weight, and the functionality of the polyester.

As used herein, where an 'acid' is mentioned as component in the esterification reaction it will be understood that acid derivatives may also be used. With acid derivatives are meant these components that react in the esterification reaction in a comparable way as the acid would do. Examples of suitable acid derivatives include acid anhydride, acid chloride, or lower alkyl esters of the acids. With lower alkyl ester is meant a C₁-C₆ linear or branched alkyl ester. It is preferred to use either the acid or the acid anhydride.

In the preparation of the branched partially defunctionalized acid-functional polyester according to the invention at least 50 mol% of the acid-derived groups originate from an aromatic acid. The rest of the acid-derived groups may originate from, for example, a linear or branched aliphatic acid or cyclo-aliphatic acid. It is preferred to have at least 75 mol%, more preferably 85% and most preferably 95% of the acid-derived groups originating from an aromatic acid.

Examples of suitable di-functional aromatic acids for use herein include phthalic acid, isophthalic acid, naphthalene dicarboxylic acid, terephthalic acid, 3,6-dichlorophthalic acid, tetrachloro phthalic acid, and combinations thereof. Preferably isophthalic acid, terephthalic acid, their anhydrides, and combinations thereof.

The multi-functional component used for preparing the polyester according to the invention is either carboxyl- functional, hydroxyl- functional or carboxyl- and hydroxyl- functional. It is preferred to have one type of functional groups on the multi-functional component thus to have only either carboxyl-functional or hydroxyl-functional groups. Examples of suitable multi- functional aromatic acids include trimellitic acid, pyromellitic acid, their anhydrides, and combinations thereof.

Examples of suitable acids for use next to the aromatic acid include cyclohexane dicarboxylic acid (CHDA), tetrahydro phthalic acid, hexahydro phthalic acid, hexachloro-tetrahydro phthalic acid, azeleic acid, sebacic acid, decane dicarboxylic acid, hydroxy stearic acid, adipic acid, succinic acid and maleic acid, their anhydrides, and combinations thereof. Preferred are CHDA, hydroxy stearic acid, adipic acid, succinic acid, maleic acid, their anhydrides, and combinations thereof.

The alcohols that are used in the synthesis of the branched partially defunctionalized acid-functional polyester according to the invention are at least di-functional. The alcohols to be used in the polyester according to the invention can have a varying character, so, for example, aliphatic alcohols can be used but also aromatic or cyclo-aliphatic alcohols or combinations thereof. Both linear and branched alcohols can be used. Examples of suitable di-functional alcohols include ethylene glycol, 1,2-propanediol, 1,3-propanediol, 1,2-butanediol, 1,4-butanediol, 1,3-butanediol, 2,2-dimethyl-1,3-propanediol (= neopentyl glycol), 2,5-hexanediol, 1,6-hexandiol, 2,2-[bis-(4-hydroxy-cyclohexyl)]-propane, 1,4-dimethylol cyclohexane, diethylene glycol and dipropylene glycol, and combinations thereof. Examples of multi-functional alcohols include glycerol, hexanetriol, pentaerythritol, sorbitol, trimethylol ethane (TME), ditrimethylol propane, rimethylol propane (TMP), and combinations thereof. Preferred are glycerol, TME, TMP, and combinations thereof.

The mono-functional component in the present polyester can both be an acid or acid derivative as defined above or an alcohol. Preferably it is an acid or acid derivative. Preferably the mono-functional component is selected from benzoic acid, substituted benzoic acids, cinnamic acid, aliphatically unsaturated substituted aromatic acid, fatty acids, and combinations thereof. Examples of suitable mono-functional aromatic acids include benzoic acid, tert.butyl benzoic acid, naphthalene carboxylic acid, and combinations thereof. Examples of mono-functional aliphatic acids include all linear and/or branched aliphatic monocarboxylic acids with 1-36 carbon atoms, for example fatty acids such as stearic acid, 2-ethylhexane carboxylic acid, versatic acid, lauric acid, and combinations thereof. Preferably the mono-functional aliphatic acid is saturated.

Examples of mono-functional alcohols include octanol, butanol, 2-ethyl-hexanol, isodecylalcohol, cyclohexanol, pentanol, hexanol, benzyl alcohol, and combinations thereof.

Preferably the mono-functional component is reactive towards a functional group on the multi-functional component.

The polyester obtained by reacting the required components in the required amounts, is an acid-functional polyester. With acid-functional polyester is here and hereinafter meant a polyester that has a substantially higher acid-value than hydroxyl-value. Preferably the acid-value is at least twice the hydroxyl-value. Preferably the hydroxyl-value is less than 25% of the acid value, more preferably the hydroxyl-value is less than 10% of the acid value. The acid value of the polyester according to the invention will generally lie between 5 and 300 mg KOH/ g resin, preferably between 15 and 250. It is clear that in all cases the hydroxyl value is lower than the acid value as else not an acid-functional polyester is obtained.

The amount of acid groups is determined by the titration of the acid/ anhydride groups by KOH. The amount of acid groups is expressed as the acid-value (AV) in mg KOH/g polyester. The amount of hydroxyl groups is determined by the titration of the hydroxyl groups with acetic anhydride and the back titration with KOH. The amount of hydroxyl groups is expressed as the hydroxyl-value (OH-value, OHV) in mg KOH used per g polyester.

The polyester according to the invention is preferably an amorphous polyester. With "amorphous" is meant that the polyester does not show a sharply defined melting on crystallization peak on a second DSC scan at a rate of 5°C/min. Generally, an amorphous polymer and/or polymer composition is characterized by a high degree of transparency (clarity) and a lack of a sharply defined melting point. Preferably the amount of crystallinity calculated from the DSC-measurement is less than 10%, preferably less than 5% and more preferably less than 1%.

The glass transition temperature (Tg) of the polyester according to the invention preferably lies above 30 °C. Preferably the Tg is higher than 40°C, more preferably the Tg is above 50°C. Generally, the higher the Tg, the better the powder stability. Additionally a high Tg is advantageous because it leads to increased hardness of the final coating when using resins with higher Tg. The Tg may be measured by differential scanning calorimetry (DSC) at a scan rate of 5°C/min. The Tg can be varied by the choice and ratio of the separate components and can thus be tailored to the needs.

In a preferred embodiment of the invention the di-functional component comprises ethylene glycol. The addition of ethylene glycol can improve the mechanical properties and chemical resistance of the resultant coating. Preferably the di-functional component comprises 8 mol% or more of ethylene glycol. More preferably, 10 mol% or more of ethylene glycol is incorporated in the di-functional alcohol, even more preferably 15 mol% or more is added.

This effect was particularly pronounced in polyesters that are based on propylene glycol, preferably the polyesters having more than 20 mol% propylene glycol. Polyesters that are based on or have at least 20 mol% of the propylene glycol benefit most from these improvements as they generally have poor mechanical properties. Thus, it has surprisingly been found that the addition of ethylene glycol to the polyesters in general, and to propylene glycol-containing polyesters in particular, improved the initial mechanical properties and also the properties over time.

A further advantage of the addition of ethylene glycol is that coating flexibility can improve. Polyesters wherein neopentyl glycol takes at least 40 mol% of the total content, have generally good mechanical properties, especially when combined with β-hydroxyalkylamide. However when at least 8% ethylene glycol is added the flexibility of the resin can increase. Consequently these ethylene glycol modified polyesters can be used in high-filled compositions or for coating for post-forming.

It was found that the susceptibility to surface defects of coatings containing ethylene glycol based polyesters, can be improved by the addition of fatty acids in combination with a multi-functional compound in the polyester synthesis. Because most of the commercially available fatty acids are mono-functional or mixtures of mono- and di-functional acids with a total functionality of less than 2, a certain amount of multi-functional component may be needed to compensate for the loss of functionality due to the addition of mono-functional component otherwise reactivity and flexibility of the total coating system will be lost.

Fatty acids are mono-, di-functional or mixtures of mono- and di-functional acids with at least 8 carbon atoms in the chain. Preferably the chain contains at least 12 carbon atoms. Preferably the aliphatic chain is 36 C-atoms or less. More preferably 30 C-atoms or less. A preferred range for the number of carbon atoms is 12-30. The chain of the fatty acid can be linear or branched, however linear is preferred. Both saturated and unsaturated fatty acids can be used, however saturated fatty acids are preferred. Examples of suitable mono-functional fatty acids include stearic acid, 2-ethylhexane acid, versatic acid, lauric acid, coconut fatty acid, palmitic fatty acid, myristic fatty acid, soy bean oil fatty acid, tallow oil fatty acid, and combinations thereof. Preferably the polyester comprises 15 wt% or less, more preferably 10 wt% or less, even more preferably 5 wt% of less, of fatty acid. Preferably the polyester comprises 0.01 wt%, more preferably 0.1 wt%, of fatty acid.

Suitable di-functional fatty acids include hydroxy fatty acids. For example hydroxy stearic acid. The hydroxy fatty acids are usually obtained by hydroxylation of mono-unsaturated fatty acid. It can be very difficult to obtain hydroxy fatty acid with high purity. The commercially available hydroxy fatty acids are usually mixtures of di-functional and mono- functional fatty acid. Even though the hydroxy fatty acids are called di-functional, they often contain mono-functional components. Preferred are saturated acids, more preferably stearic acid.

The present embodiment comprises branched, partially defunctionalized, acid-functional polyester, wherein the polyester is based on:
a. At least one multi-functional component that is either carboxyl- functional, hydroxyl- functional or carboxyl- and hydroxyl- functional;
b. At least 8 mol% of ethylene glycol; and
c. At least one long aliphatic chain mono-functional fatty acid;
wherein at least 50% of the acid-derived groups originate from an aromatic acid.

It was found to be advantageous when the multi-functional component did not contain a tertiary carboxylic functionality. For the multi-functional component the same preferences hold as described for the polyester above.

The polyester according to this embodiment of the invention can advantageously be used in a binder comprising a crosslinker and this polyester. Such a binder has good combination flexibility and reactivity properties.

In another preferred embodiment of the invention the mono-functional component is an aliphatic mono-carboxylic acid. With the implementation of stricter volatile organic compound (VOC) regulations, there is a growing need for coating compositions which give rise to low VOC such as powder coating compositions. One of the challenges with the use of powder coating compositions is their poor adhesion and salt spray resistance on "difficult" or poor pretreated substrates like galvanized steel, hot dipped, and cold rolled steel.

Polyesters used for powder coating for outdoor applications usually have a theoretical functionality (F) between 2 and 2.5. This is because the cross-linkers have a theoretical functionality higher than 2 (e.g. TGIC =3, Primid®=4). However, using polyesters with functionality higher than 2 can lead to a coating with poor gloss and appearance, reduced flow, bad DOI, and, when β-hydroxyalkylamide, is used a lower degassing limit. Usually improvement of the corrosion resistance (salt spray) can be achieved by increasing the cross-link density of the coating. But the increase of the functionality of the resin can lead to a certain disadvantages.

It has been found that using a branched partially defunctionalized acid-functional polyester that is based on:
a. At least one multi-functional component that is either carboxyl- functional, hydroxyl- functional or carboxyl- and hydroxyl- functional;
b. At least one di-functional component that is reactive towards a functional group on the multi-functional component; and
c. At least one fatty acid as mono-functional component;
and wherein at least 50% of the acid-derived groups originate from an aromatic acid, eliminates or reduces some or all of the disadvantages mentioned above. An additional advantage of this polyester is that it reduces problems with the lower degassing limit and the higher reactivity of the branched resins during the introduction of additional cross-linking in the coating. Another advantage is that the coating can help to better protect a substrate against corrosion. It was found to be advantageous when the multi-functional component did not contain a tertiary carboxylic functionality.

Fatty acids are mono-, di-functional or mixtures of mono- and di-functional acids with at least 8 carbon atoms in the chain. Preferably the chain contains at least 12 carbon atoms. Preferably the aliphatic chain is 36 C-atoms or less. More preferably 30 C-atoms or less. A preferred range for the number of carbon atoms is 12-30. Examples of suitable mono-functional fatty acids include stearic acid, 2-ethylhexane acid, versatic acid, lauric acid, coconut fatty acid, palmitic fatty acid, myristic fatty acid, soy bean oil fatty acid, tallow oil fatty acid, and combinations thereof. Preferred are saturated fatty acids, more preferably stearic acid. Preferably the polyester comprises 15 wt% or less, more preferably 10 wt% or less, even more preferably 5 wt% of less, of fatty acid. Preferably the polyester comprises 0.01 wt%, more preferably 0.1 wt%, of fatty acid.

The polyester according to this embodiment of the invention can advantageously be used in a binder comprising a cross-linker and the polyester. Powder coatings comprising this binder show some improvement in corrosion resistance.

In a further preferred embodiment the mono-functional component is chosen from benzoic acid and/or substituted benzoic acids. Here and hereinafter benzoic acid and substituted benzoic acid will together be referred to as "benzoic acid". It was found that the use of benzoic acid as part of the mono-functional component in the polyester can help prevent dripping when thicker films are needed without compromising the degassing limit when Primid® is used as cross-linker. Substrates with thick coatings have better protection and barrier properties especially under severe conditions, such as, for example, in a marine environment.

A suitable example for substituted benzoic acid is tertiary butyl benzoic acid.

The benzoic acid may be used alone or in combination with other components for the mono-functional component in the polyester synthesis. Preferably at least 50 mol% of the mono-functional component is made up by the benzoic acid, more preferably at least 75%, even more preferably 100%, of the mono-functional component is benzoic acid. The use of mono-functional acids may decrease the total functionality of the resin. It may, therefore, be necessary to add a certain amount of multi-functional component to compensate for the loss of functionality. With this compensation it is possible that the reactivity, the flexibility, the crosslink density and other protective properties of the total coating system will be compromised.

In a further embodiment of the invention the mono-functional component is chosen from cinnamic acid, aliphatically unsaturated substituted aromatic acid, and combinations thereof. Here and hereinafter cinnamic acid and aliphatically unsaturated substituted aromatic acid will together be referred to as "cinnamic acid".

It was found that the use of cinnamic acid as part of the mono-functional component in the polyester according to the invention resulted in improved adhesion of the coating to the substrate when the coating was derived from a binder comprising the polyester.

The cinnamic acid may be used alone or in combination with other components for the mono-functional component in the polyester synthesis. Preferably at least 50 mol% of the mono-functional component is made up by the cinnamic acid, more preferably at least 75%, even more preferably 100%, of the mono-functional component is cinnamic acid. An additional advantage of the use of cinnamic acid appeared to be that the acid acted as a built-in anti-oxidant. Therefore, the coating obtained from a binder comprising the polyester could have improved long-term UV-resistance.

The invention not only relates to the polyesters as described under the various embodiments, it also relates to binders comprising these polyesters and at least one crosslinker. Generally, the weight ratio polyester:crosslinker ranges between 50:50 and 98:2 and more preferably this ratio ranges between 75:25 and 97:3. The selection of the ratio is dependent on, for example, the selected crosslinker and the end application of the coating. Preferably the crosslinker is reactive with acid functional polyesters. Preferably the crosslinker is β-hydroxyalkyl amide

The preparation of thermosetting powder coatings in general and the chemical reactions for curing powder coatings to form cured powder coatings are described by T. Misev in Powder Coatings, Chemistry and Technology (1991, John Wiley) on pp. 42-54, pp. 148 and 224-226. Test procedures are described at pages 284-300. A thermosetting powder coating binder composition is generally defined as the resinous part of the powder coating composition consisting of polymer and crosslinker and this composition generally contains more than 50 wt% polymer and less than 50 wt% crosslinker.

The invention also relates to powder coating compositions comprising the binder according to the various embodiments and at least one additive. Examples of additives include pigment, filler, degassing agent, flow agent and/ or stabilizer. Suitable pigments include for example inorganic pigments, such as for example titanium dioxide, zinc sulphide, iron oxide and chromium oxide, and also organic pigments such as, for example, azo compounds. Suitable fillers include for example metal oxides, silicates, carbonates and sulphates. Primary and/or secondary antioxidants, UV stabilizers such as quinones, (sterically hindered) phenolic compounds, phosphonites, phosphites, thioethers, HALS compounds (hindered amine light stabilizers) and aromatic amines, may for example be used as stabilizers. Examples of degassing agents include benzoin and cyclohexane dimethanol bisbenzoate. Examples of flow agents include polyalkylacrylates, fluorohydrocarbons and silicone fluids. Other suitable additives include, for example, additives for improving tribocharging, such as sterically hindered tertiary amines that are described in EP-B-371528.

Powder coating compositions according to the invention can be applied to a suitable substrate in any suitable manner. For example, by electrostatically spraying the powder coating composition onto an earthed substrate and curing the composition to form a coating by exposing it to heat at a suitable temperature for a sufficient length of time. The applied powder can for example be heated in a gas oven, an electric oven or with the aid of infrared radiation or UV-radiation.

The invention further relates to a coating obtained after curing the powder coating composition. These coatings have very advantageous properties as described under the various embodiments. The powder coating compositions can be applied to all kinds of substrates. Examples of suitable substrates include metals, (galvanized) steel, cast iron, aluminium, other alloys, glass, ceramics, wood, bricks, and combinations thereof.

The invention also relates to a substrate fully or partially coated with a powder coating composition according to the invention.

### Example 1

Example 1 (Table 1) was prepared by adding the trimethylol propane, propylene glycol, ethylene glycol, terephthalic acid, butyl stannoic acid and trisnonylphenyl phosphite to a 6 liter flask equipped with a stirrer, nitrogen sparge, a temperature control unit and distillation glassware. The mixture was heated slowly to 240°C, while the water was distilled off. When the water distillation stopped, the reaction mixture was cooled to 220°C and the adipic acid and stearic acid were added. After 2.5 hours at 220°C, a vacuum of 50 mm Hg was applied. After 3 hours of vacuum at 220°C the obtained polyester was cooled down to 180°C then the resin was discharged.

**Table1: Composition and Characteristics for Example 1**

| | Ex.1 |
|---|---|
| Trimethylol propane, mol | 0.75 |
| Propylene glycol, mol | 14.4 |
| Ethylene glycol, mol | 10.7 |
| Purified terephthalic acid, mol | 24.8 |
| Adipic acid, mol | 2.25 |
| Stearic acid, mol | 0.5 |
| Butyl stannoic acid, mol | 0.01 |
| Trisnonylphenyl phosphate, mol | 0.01 |
| Total mols | 53.4 |
| % Ethylene glycol | 20.0 |
| % Propylene glycol | 27.0 |
| Mw | 3783 |
| Acid Functionality | 1.9 |
| Total Funtionality (COOH + OH) | 2.2 |
| Calculated Acid Value (mgKOH/g) | 28 |
| Calculated OH Value (mgKOH/g) | 4.3 |
| MEASURED VALUES | |
| Acid Value (mgKOH/g) | 28.5 |
| Viscosity¹, Pa.s | 27.5 |
| Tg², °C | 54.0 |

| | |
|---|---|
| ¹Viscosity-measured at 160°C, Rheometrics CP 5 ²Tg - Glass transition temperature. Tg is measured by differential scanning calorimetry (DSC) at a scan rate of 5°C/min. | |

Example 1 was formulated into powder paint composition (Table 2) and coated on to substrates according to the following procedure:
a) The components of the powder paint were dry mixed in a blender and then were homogenized in melt using PRISM TSE16 PC twin screw extruder at an extrusion temperature 120°C and a speed of 200rpm.
b) The extrudate was cooled and ground in an Alpine grinder. Subsequently, the powder was sieved to obtain a particle size of between 10 and 90µm.
c) The powder thus obtained were deposited by Corona spray gun onto ground on one side steel substrates S-46. The panels are cured in an air-circulated oven for 8 minutes at 200°C.

**Table 2: Powder Paint Composition**

| | PP 1 |
|---|---|
| Example 1 | 1152 |
| Primid XL552 | 48 |
| Kronos 2160 | 600 |
| Resiflow PV5 | 18 |
| Benzoin | 5 |
| Total | 1823 |

| | |
|---|---|
| Primid XL552 - ß-hydroxyalkyl amide cross-linker trade mark of EMS. Kronos 2160 - TiO2 trade mark kronos titan GmbH Resiflow PV5 - flow agent trade mark Worlee-Chemie GmbH. | |

The mechanical properties of the cured coatings were tested following ASTM D 2794-reverse impact 5/8"ball 160 inch pounds at layer thickness 50µm and 75µm. The test results showed good mechanical properties.

The appearance, flow, and gloss were evaluated at 60 µm thickness and were found to be acceptable.

### Example 2

1 mol trimethylol propane, 18.338 mol neopentyl glycol, 34.453 mol terephthalic acid, 14.812 mol ethylene glycol, 0.01 mol butyl stannoic acid, and 0.01 mol trisnonylphenyl phosphite were charged in a 10 liter flask equipped with a stirrer, nitrogen sparge, a temperature control unit, and distillation glassware. The mixture is heated slowly to 250°C so the water is distilled off. When the water distillation stopped, the reaction mixture was cooled to 220°C and 1 mol stearic acid was added. The reaction mixture was then heated to 245°C and a vacuum of 50 mm Hg was applied. After 4 hours of vacuum at 245°C the obtained polyester was cooled to 180°C and discharged.

The obtained resin had the following specifications
AV=22.5
OH=4.1
Tg =59.6°C
Viscosity =85.0 Pa.s

Powder paint compositions (Table 3) were prepared and coated onto substrates in the following manner:
a) The components of the powder paint were dry mixed in a blender and then homogenized in melt using PRISM TSE16 PC twin screw extruder at an extrusion temperature 120°C and a speed of 200rpm.
b) The extrudate was cooled and ground in an Alpine grinder. Subsequently, the powder was sieved to obtain a particle size of between 10 and 90µm.
c) The powders thus obtained are deposited by Corona spray gun onto ground on one side steel substrates S-46 and aluminum substrates AIQ-46. The panels are cured in air-circulated oven for 6,8 or 10 minutes at 200°C.

**Table 3: Powder Paint compositions**

| | PP 2.1 | PP 2.2 | PP 2.3 | PP 2.4 |
|---|---|---|---|---|
| Example 2 | 289.5 | 289.5 | 289.5 | 289.5 |
| Primid XL552 | 10.5 | 10.5 | 10.5 | 10.5 |
| Kronos 2160 | 150 | 100 | 100 | 100 |
| Blank fix N | - | 150 | 200 | 250 |
| Resiflow PV5 | 4.5 | 4.5 | 4.5 | 4.5 |
| Benzoin | 1.25 | 1.25 | 1.25 | 1.25 |

| | | | | |
|---|---|---|---|---|
| Primid XL552 - ß-hydroxyalkyl amide cross-linker trade mark of EMS. Kronos 2160-TiO2 trade mark kronos titan GmbH Resiflow PV5 - flow agent trade mark Worlee-Chemie GmbH. Blank fix N - BaSO4 filler | | | | |

### Example 3

1 mol trimethylol propane, 18.338 mol neopentyl glycol, 34.453 mol terephthalic acid, 14.812 mol ethylene glycol, 0.01 mol butyl stannoic acid, and 0.01 mol trisnonylphenyl phosphite were charged in 10 liter flask equipped with a stirrer, nitrogen sparge, a temperature control unit, and distillation glassware. The mixture is heated slowly to 250°C, so the water is distilled off. When the water distillation stopped, the reaction mixture was cooled to 220°C and 1 mol stearic acid was added. The reaction mixture was then heated to 235°C and a vacuum of 50 mm Hg was applied. After 4 hours of vacuum at 235°C the obtained polyester was cooled to 180°C, and the resin was discharged.

A powder paint composition (Table 4) was prepared the same way described for Example 2.

**Table 4: Powder Paint Composition**

| | PP 3 |
|---|---|
| Example 3 | 288 |
| Primid XL552 | 12 |
| Kronos 2160 | 150 |
| Resiflow PV5 | 4.5 |
| Benzoin | 1.25 |

| | |
|---|---|
| Primid XL552 - ß-hydroxyalkyl amide cross-linker trade mark of EMS. Kronos 2160 - TiO2 trade mark kronos titan GmbH Resiflow PV5 - flow agent trade mark Worlee-Chemie GmbH. | |

The powder thus obtained was deposited by Corona spray gun onto cold rolled steel substrates R-46. The panels were cured in air-circulated oven for 8 minutes at 200°C.

## Claims

1. Powder coating composition comprising a binder composition, said binder composition comprising a branched, partially defunctionalized acid-functional polyester and a crosslinker that is reactive with acid-functional polyester, wherein :
a. the crosslinker comprises ß-hydroxyalkylamide; and
b. the branched, partially defunctionalized acid-functional polyester is based on:
i) at least one multi-functional component that is either carboxyl-functional, hydroxyl-functional or carboxyl- and hydroxyl- functional and the multi-functional component does not contain a tertiary carboxylic functionality; and
ii) at least one di-functional component that is reactive towards a functional group on the multi-functional component; and
iii) at least one monofunctional component, said monofunctional component being a fatty acid;
and at least 50 mol% of the acid-derived groups in the branched, partially defunctionalized acid-functional polyester originate from an aromatic acid.

2. Composition according to claim 1, wherein the crosslinker is ß-hydroxyalkylamide.

3. Composition according to any one of claims 1-2, wherein the glass transition temperature of the branched, partially defunctionalized acid-functional polyester, measured by differential scanning calorimetry (DSC) at a scan rate of 5 °C/min, is higher than 40 °C.

4. Composition according to any one of claims 1-3, wherein the branched, partially defunctionalized acid-functional polyester has an acid value between 5 and 300 mg KOH/g polyester.

5. Composition according to any one of claims 1-4, wherein the branched, partially defunctionalized acid-functional polyester has an acid value between 15 and 250 mg KOH/g polyester and that the acid value is at least twice the hydroxyl value.

6. Composition according to any one of claims 1-5, wherein the at least one multi-functional component has a functionality of three.

7. Composition according to any one of claims 1-6, wherein the branched, partially defunctionalized acid-functional polyester comprises 15 wt% or less of fatty acid.

8. Composition according to any one of claims 1-6, wherein the branched, partially defunctionalized acid-functional polyester comprises 10 wt% or less of fatty acid.

9. Composition according to any one of claims 1-6, wherein the branched, partially defunctionalized acid-functional polyester comprises 5 wt% or less of fatty acid.

10. Composition according to any one of claims 1-6, wherein the branched, partially defunctionalized acid-functional polyester comprises 0.01 wt% or more and 15 wt% or less of fatty acid.

11. Composition according to any one of claims 1-6, wherein the branched, partially defunctionalized acid-functional polyester comprises 0.01 wt% or more and 10 wt% or less of fatty acid.

12. Composition according to any one of claims 1-6, wherein the branched, partially defunctionalized acid-functional polyester comprises 0.01 wt% or more and 5 wt% or less of fatty acid.

13. Composition according to any one of claims 1-6, wherein the branched, partially defunctionalized acid-functional polyester comprises 0.1 wt% or more and 5 wt% or less of fatty acid.

14. Composition according to any one of claims 1-13, wherein the chain of the fatty acid contains at least 12 carbon atoms.

15. Composition according to any one of claims 1-13, wherein the number of carbon atoms in the fatty acid is 12-30.

16. Composition according to any one of claims 1-15, wherein the at least one di-functional component comprises 8 mol% or more of ethylene glycol.

17. Composition according to any one of claims 1-16, wherein the branched, partially defunctionalized acid-functional polyester has more than 20 mol% propylene glycol.

18. Composition according to any one of claims 1-17 comprising further at least one additive.

19. Coating obtained after curing a composition according to any one of claims 1-18.

20. Substrate fully or partially coated with a composition according to any one of claims 1-18.

## Patentansprüche

1. Pulverlackzusammensetzung, umfassend eine Bindemittelzusammensetzung, wobei die Bindemittelzusammensetzung einen verzweigten, teilweise defunktionalisierten säurefunktionellen Polyester und einen Vernetzer, der gegenüber dem säurefunktionellen Polyester reaktiv ist, umfasst, wobei:
a. der Vernetzer β-Hydroxyalkylamid umfasst und
b. der verzweigte, teilweise defunktionalisierte säurefunktionelle Polyester auf
i) mindestens einer multifunktionellen Komponente, die entweder carboxylfunktionell, hydroxylfunktionell oder carboxyl- und hydroxylfunktionell ist und keine tertiäre Carboxylfunktionalität enthält; und
ii) mindestens einer difunktionellen Komponente, die gegenüber einer funktionellen Gruppe an der multifunktionellen Komponente reaktiv ist; und
iii) mindestens einer monofunktionellen Komponente, wobei es sich bei der monofunktionellen Komponente um eine Fettsäure handelt;
basiert und mindestens 50 Mol-% der von Säure abgeleiteten Gruppen in dem verzweigten, teilweise defunktionalisierten säurefunktionellen Polyester von einer aromatischen Säure stammen.

2. Zusammensetzung nach Anspruch 1, wobei es sich bei dem Vernetzer um β-Hydroxyalkylamid handelt.

3. Zusammensetzung nach einem der Ansprüche 1-2, wobei die durch Differentialkalorimetrie (Differential Scanning Calometry, DSC) mit einer Scanrate von 5°C/min gemessene Glasübergangstemperatur des verzweigten, teilweise defunktionalisierten säurefunktionellen Polyesters größer als 40°C ist.

4. Zusammensetzung nach einem der Ansprüche 1-3, wobei der verzweigte, teilweise defunktionalisierte säurefunktionelle Polyester eine Säurezahl zwischen 5 und 300 mg KOH/g Polyester aufweist.

5. Zusammensetzung nach einem der Ansprüche 1-4, wobei der verzweigte, teilweise defunktionalisierte säurefunktionelle Polyester eine Säurezahl zwischen 15 und 250 mg KOH/g Polyester aufweist und die Säurezahl mindestens doppelt so groß wie die Hydroxylzahl ist.

6. Zusammensetzung nach einem der Ansprüche 1-5, wobei die mindestens eine multifunktionelle Komponente eine Funktionalität von drei aufweist.

7. Zusammensetzung nach einem der Ansprüche 1-6, wobei der verzweigte, teilweise defunktionalisierte säurefunktionelle Polyester 15 Gew.-% oder weniger Fettsäure umfasst.

8. Zusammensetzung nach einem der Ansprüche 1-6, wobei der verzweigte, teilweise defunktionalisierte säurefunktionelle Polyester 10 Gew.-% oder weniger Fettsäure umfasst.

9. Zusammensetzung nach einem der Ansprüche 1-6, wobei der verzweigte, teilweise defunktionalisierte säurefunktionelle Polyester 5 Gew.-% oder weniger Fettsäure umfasst.

10. Zusammensetzung nach einem der Ansprüche 1-6, wobei der verzweigte, teilweise defunktionalisierte säurefunktionelle Polyester 0,01 Gew.-% oder mehr und 15 Gew.-% oder weniger Fettsäure umfasst.

11. Zusammensetzung nach einem der Ansprüche 1-6, wobei der verzweigte, teilweise defunktionalisierte säurefunktionelle Polyester 0,01 Gew.-% oder mehr und 10 Gew.-% oder weniger Fettsäure umfasst.

12. Zusammensetzung nach einem der Ansprüche 1-6, wobei der verzweigte, teilweise defunktionalisierte säurefunktionelle Polyester 0,01 Gew.-% oder mehr und 5 Gew.-% oder weniger Fettsäure umfasst.

13. Zusammensetzung nach einem der Ansprüche 1-6, wobei der verzweigte, teilweise defunktionalisierte säurefunktionelle Polyester 0,1 Gew.-% oder mehr und 5 Gew.-% oder weniger Fettsäure umfasst.

14. Zusammensetzung nach einem der Ansprüche 1-13, wobei die Kette der Fettsäure mindestens 12 Kohlenstoffatome enthält.

15. Zusammensetzung nach einem der Ansprüche 1-13, wobei die Zahl der Kohlenstoffatome in der Fettsäure 12-30 beträgt.

16. Zusammensetzung nach einem der Ansprüche 1-15, wobei die mindestens eine difunktionelle Komponente 8 Mol-% oder mehr Ethylenglykol umfasst.

17. Zusammensetzung nach einem der Ansprüche 1-16, wobei der verzweigte, teilweise defunktionalisierte säurefunktionelle Polyester mehr als 20 Mol-% Propylenglykol aufweist.

18. Zusammensetzung nach einem der Ansprüche 1-17, die ferner mindestens ein Additiv umfasst.

19. Lack, erhalten nach Härten einer Zusammensetzung nach einem der Ansprüche 1-18.

20. Substrat, das ganz oder teilweise mit einer Zusammensetzung nach einem der Ansprüche 1-18 beschichtet ist.

## Revendications

1. Composition de revêtement en poudre comprenant une composition de liant, ladite composition de liant comprenant un polyester à fonction acide partiellement défonctionnalisé ramifié et un agent de réticulation qui est réactif avec un polyester à fonction acide, dans laquelle :
a. l'agent de réticulation comprend un β-hydroxyalkylamide ; et
b. le polyester à fonction acide partiellement défonctionnalisé ramifié est à base de :
i) au moins un composant multifonctionnel qui est soit à fonction carboxyle, soit à fonction hydroxyle soit à fonction carboxyle et hydroxyle, le composant multifonctionnel ne contenant pas une fonction carboxylique tertiaire ; et
ii) au moins un composant difonctionnel qui est réactif vis-à-vis d'un groupe fonctionnel présent sur le composant multifonctionnel ; et
iii) au moins un composant monofonctionnel, ledit composant monofonctionnel étant un acide gras ;
et au moins 50 % en mole des groupes dérivés d'acide dans le polyester à fonction acide partiellement défonctionnalisé ramifié provenant d'un acide aromatique.

2. Composition selon la revendication 1, dans laquelle l'agent de réticulation est un β-hydroxyalkylamide.

3. Composition selon l'une quelconque des revendications 1-2, dans laquelle la température de transition vitreuse du polyester à fonction acide partiellement défonctionnalisé ramifié, mesurée par calorimétrie différentielle à balayage (DSC) à une vitesse de balayage de 5 °C/min, est supérieure à 40 °C.

4. Composition selon l'une quelconque des revendications 1-3, dans laquelle le polyester à fonction acide partiellement défonctionnalisé ramifié a un indice d'acide compris entre 5 et 300 mg de KOH/g de polyester.

5. Composition selon l'une quelconque des revendications 1-4, dans laquelle le polyester à fonction acide partiellement défonctionnalisé ramifié a un indice d'acide compris entre 15 et 250 mg de KOH/g de polyester et l'indice d'acide est au moins le double de l'indice d'hydroxyle.

6. Composition selon l'une quelconque des revendications 1-5, dans laquelle l'au moins un composant multifonctionnel a une fonctionnalité de trois.

7. Composition selon l'une quelconque des revendications 1-6, dans laquelle le polyester à fonction acide partiellement défonctionnalisé ramifié comprend 15 % en poids ou moins d'acide gras.

8. Composition selon l'une quelconque des revendications 1-6, dans laquelle le polyester à fonction acide partiellement défonctionnalisé ramifié comprend 10 % en poids ou moins d'acide gras.

9. Composition selon l'une quelconque des revendications 1-6, dans laquelle le polyester à fonction acide partiellement défonctionnalisé ramifié comprend 5 % en poids ou moins d'acide gras.

10. Composition selon l'une quelconque des revendications 1-6, dans laquelle le polyester à fonction acide partiellement défonctionnalisé ramifié comprend 0,01 % en poids ou plus et 15 % en poids ou moins d'acide gras.

11. Composition selon l'une quelconque des revendications 1-6, dans laquelle le polyester à fonction acide partiellement défonctionnalisé ramifié comprend 0,01 % en poids ou plus et 10 % en poids ou moins d'acide gras.

12. Composition selon l'une quelconque des revendications 1-6, dans laquelle le polyester à fonction acide partiellement défonctionnalisé ramifié comprend 0,01 % en poids ou plus et 5 % en poids ou moins d'acide gras.

13. Composition selon l'une quelconque des revendications 1-6, dans laquelle le polyester à fonction acide partiellement défonctionnalisé ramifié comprend 0,1 1 % en poids ou plus et 5 % en poids ou moins d'acide gras.

14. Composition selon l'une quelconque des revendications 1-13, dans laquelle la chaîne de l'acide gras contient au moins 12 atomes de carbone.

15. Composition selon l'une quelconque des revendications 1-13, dans laquelle le nombre d'atomes de carbone dans l'acide gras est de 12-30.

16. Composition selon l'une quelconque des revendications 1-15, dans laquelle l'au moins un composant difonctionnel comprend 8 % en mole ou plus d'éthylèneglycol.

17. Composition selon l'une quelconque des revendications 1-16, dans laquelle le polyester à fonction acide partiellement défonctionnalisé ramifié a plus de 20 % en mole de propylèneglycol.

18. Composition selon l'une quelconque des revendications 1-17 comprenant en outre au moins un additif.

19. Revêtement obtenu après durcissement d'une composition selon l'une quelconque des revendications 1-18.

20. Substrat totalement ou partiellement revêtu d'une composition selon l'une quelconque des revendications 1-18.
